# EUROPEAN PATENT SPECIFICATION

(11) **EP 0 412 066 B1**
(45) Date of publication and mention of the grant of the patent: **08.09.1993**
(21) Application number: 90830357.1
(22) Date of filing: 31.07.1990
(51) Int. Cl.: B60H 1/24, F24F 13/12

(54) **An air vent with vertical fluid-dynamic deflection of the air flow**
Luftausströmorgan mit vertikaler hydrodynamischer Abbiegung einer Luftströmung
Dispositif aérateur permettant la déflexion verticale de l'écoulement de l'air

(30) Priority: 04.08.1989 IT 6768589
(43) Date of publication of application: 06.02.1991
(73) Proprietor: FIAT AUTO S.p.A., 10135 Torino (IT)
(72) Inventor: Piritore, Giuseppe, I-10078 Venaria (Torino) (IT); Tarzia, Antonio, I-10064 Pinerolo (Torino) (IT)
(74) Representative: Bosotti, Luciano

(56) References cited:
- EP-A- 0 151 756
- DE-A- 3 303 987
- DE-A- 3 333 878
- DE-A- 3 731 104
- FR-A- 2 082 702
- GB-A- 1 498 871

## Description

The present invention relates to an air vent, particularly for motor vehicle dashboards.

Air vents having concealment devices which operate when they are not in use are known, since such vents are difficult to integrate in a pleasing manner with the lines and appearance of the dashboard. Obviously, this solution does not resolve the aesthetic problem when the vents are in operation and cannot be concealed.

Known air vents of another type have vanes for deflecting the outflowing air and these can also be used to conceal the outlet orifice of the vent in the dashboard. In this case, there is an aesthetic problem of matching the vanes with the line of the dashboard.

Known air vents of a further type are covered by an aesthetic grille. This solution has the disadvantage that the grille affects the direction of the air flow from the vent.

Furthermore DE-A-3303987 describes an aeration system for closed rooms, formed by ducts having a plurality of outlets with different spatial orientations. The distribution of the air flow among the various outlets can be controlled by positioning a sliding shutting member, which cooperates with such outlets.

In order to avoid the problems cited, the subject of the present invention is an air vent, particularly for motor vehicle dashboards, characterised in that it includes:
a fixed duct for the air flow, having an inlet end and an outlet end,
an element situated in the duct near the outlet end and cooperating with the inside walls of the duct to define at least two separate passages for the air flow, which are arranged in parallel at different inclinations to the axis of the duct, and
a shaped member for shutting off or for controlling the inclination of the air flow,
situated in the duct and adapted, by assuming different positions, to shut off the flow of air and to allow it in only one passage or in several passages simultaneously.

According to the invention, the vent in the dashboard is restricted to the outlet slot of the fixed air-flow duct which can be used as an aesthetic motif.

There is also the advantage that the inclination of the air flow from the vent to the vertical plane can be varied more widely than in conventional vents, by virtue of the presence of several passages in the fixed duct.

Further characteristics and advantages of the present invention will become clear from the detailed description which follows with reference to the appended drawings, provided by way of non-limiting example, in which:

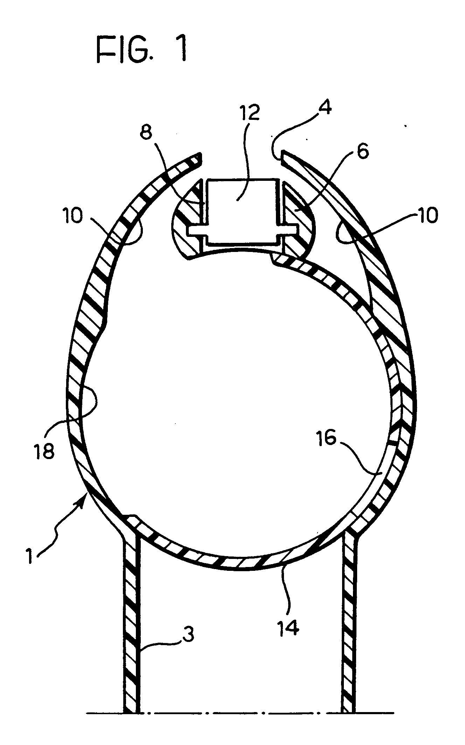

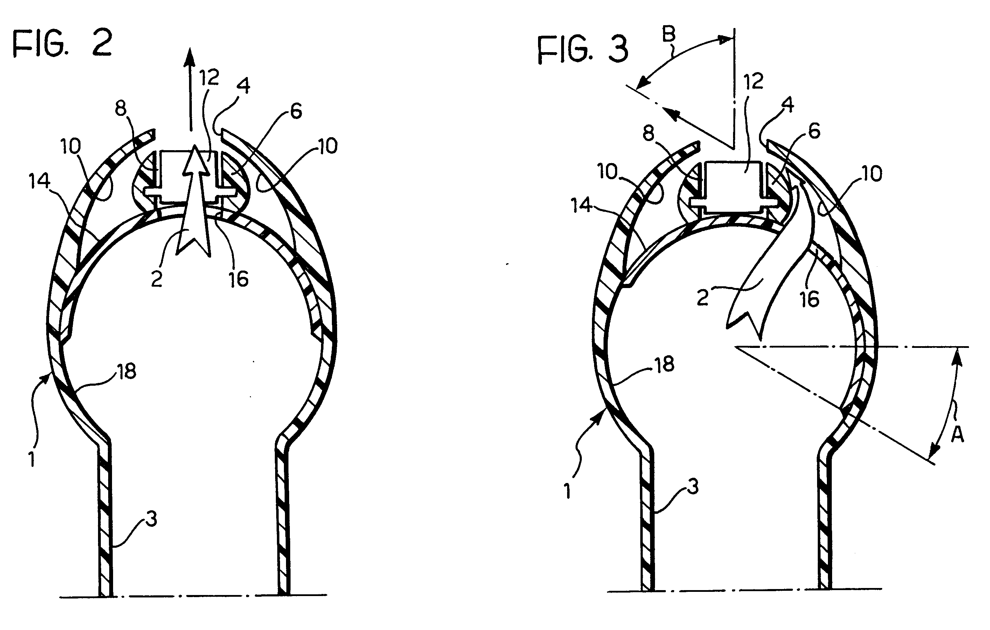

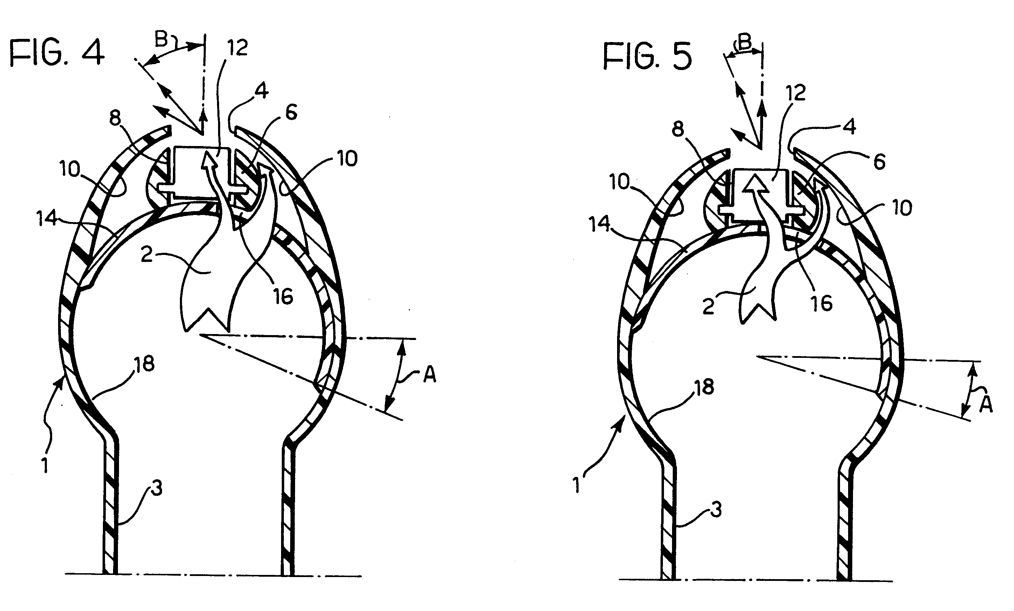

Figures 1 to 5 are sectioned side view of an air vent according to the invention in different operating positions.

With reference to the drawings, an air vent for a motor vehicle dashboard has a fixed duct 1 for the air flow 2, with an inlet end 3 and an outlet end 4 flush with the plane of the dashboard, not shown.

An element 6 situated in the duct 1 near the outlet end 4 defines a central passage 8 which is substantially parallel to the axis of the duct 1 and, in cooperation with the inside wall of the duct 1, two side passages 10 which are inclined symmetrically to the axis of the duct 1 in opposite directions.

In the central passage 8, the element 6 also supports a deflector vane 12 for controlling the inclination of the air flow 2 in the horizontal plane.

A semi-tubular member 14 for shutting off the air flow 2 is situated upstream of the element 6 and has an axial slot 16. The member 14 is located in a seat 18 formed in the inside wall of the duct 1 and can be rotated about its central axis by known means, not shown, such as a Bowden cable or an electro-mechanical actuator, or by direct manual operation by the passengers of the motor vehicle.

The drawings show various operating positions of the vent, in which an angle of rotation of the shut-off member 14, indicated by the reference letter A, corresponds to an angle of inclination to the vertical of the air flow from the vent, indicated by the reference B.

According to the angular position assumed by the slot 16 in the shut-off member 14, the air flow 2 can be shut off completely (Figure 1) or can be directed into just the central passage 8 (Figure 2), into one of the side passages (Figure 3) or into both the central passage 8 and one of the side passages 10, with different possible distributions (Figures 4 and 5). In the latter case, the flow from the side passage 10 exerts a fluid-dynamic deflection effect on the flow from the central passage 8.

Thus, with a vent according to the invention, the angle of deflection of the outflowing air from the vertical can be varied widely.

## Claims

1. An air vent, particularly for a motor vehicle dashboard, characterised in that it includes:
a fixed duct (1) for the air flow (2), having an inlet end (3) and an outlet end (4),
an element (6) situated in the duct (1) near the outlet end (4) and cooperating with the inside walls of the duct (1) to define at least two separate passages (8, 10) for the air flow (2), which are arranged in parallel at different inclinations to the axis of the duct (1), and
a shaped member (14) for shutting off or for controlling The inclination of the air flow (2), situated in the duct (1) and adapted, by assuming different positions, to shut off the flow (2) of air and to allow it in only one passage or in several passages (8, 10) simultaneously.

2. An air vent according to Claim 1, characterised in that the element (6) in the duct (1) defines a central channel (8) which is substantially parallel to the axis of the duct (1) and, in cooperating with the inside wall of the duct (1), two side channels (10) which are inclined symmetrically to the axis of the duct (1) in opposite directions.

3. A vent according to Claim 2, characterised in that the element (6) supports a deflector vane (12) in the central passage (8) for controlling the inclination of the air flow (2) in the horizontal plane.

4. A vent according to any one of the preceding claims, characterised in that the shut-off member (14) is situated upstream of the element (6) and is semi-tubular in shape with an axial slot (16) and, according to the angular position it assumes, prevents communication between the inlet end (3) of the duct (1) and its outlet end (4) or puts the inlet end (3) into communication with one or more of the passages (8, 10) to enable the direction of the air flow (2) from the vent to be varied.

## Patentansprüche

1. Luftausströmelement, insbesondere für ein Kraftfahrzeugarmaturenbrett,
**dadurch gekennzeichnet**, daß es umfaßt:
eine feste Leitung (1) für den Luftstrom (2) mit einem Einlaßende (3) und einem Auslaßende (4),
ein Element (6), welches in der Leitung (1) nahe dem Auslaßende (4) angeordnet ist und mit den Innenwandungen der Leitung (1) zusammenwirkt, um wenigstens zwei getrennte Durchlässe (8,10) für den Luftstrom (2) festzulegen, die parallel mit unterschiedlichen Neigungen zu der Achse der Leitung (1) angeordnet sind, und
ein Formteil (14) zum Absperren oder zum Steuern der Neigung des Luftstroms (2), welches in der Leitung (1) angeordnet ist und ausgebildet ist, durch Einnehmen verschiedener Stellungen den Luftstrom (2) abzusperren und ihn nur in einem Durchlaß oder in mehreren Durchlässen (8,10) gleichzeitig zuzulassen.

2. Luftausströmelement nach Anspruch 1,
**dadurch gekennzeichnet**, daß
das Element (6) in der Leitung (1) einen zentralen Kanal (8) festlegt, der zu der Achse der Leitung (1) im wesentlichen parallel ist, und, mit der Innenwandung der Leitung (1) zusammenwirkend, zwei Seitenkanäle (10) festlegt, welche in entgegengesetzten Richtungen symmetrisch zu der Achse der Leitung (1) geneigt sind.

3. Ausströmelement nach Anspruch 2,
**dadurch gekennzeichnet**, daß
das Element (6) eine Ablenkschaufel (12) in dem zentralen Durchlaß (8) trägt, zum Steuern der Neigung des Luftstroms (2) in der Horizonalebene.

4. Ausströmelement nach einem der vorhergehenden Ansprüche,
**dadurch gekennzeichnet**, daß
das Absperrelement (14) stromaufwärts des Elements (6) angeordnet ist und eine halbrohrförmige Gestalt mit einem Axialschlitz (16) aufweist und gemäß der Winkelstellung, die es einnimmt, eine Verbindung zwischen dem Einlaßende (3) der Leitung (1) und ihrem Auslaßende (4) verhindert, oder das Einlaßende (3) mit einem oder mehreren der Durchlässe (8,10) verbindet, um eine Variation der Richtung des Luftstroms (2) aus dem Ausströmelement zu ermöglichen.

## Revendications

1. Dispositif de ventilation, en particulier pour un tableau de bord de véhicule à moteur, caractérisé en ce qu'il comprend :
- un conduit fixe (1) pour l'écoulement de l'air (2) possédant une extrémité d'entrée (3) et une extrémité de sortie (4);
- un élément (6) situé dans le conduit (1) près de l'extrémité de sortie (4) et coopérant avec les parois internes du conduit (1) pour définir au moins deux passages séparés (8, 10) pour l'écoulement de l'air (2) qui sont placés en parallèle selon des inclinaisons différentes par rapport à l'axe du conduit (1); et
- une pièce conformée (14) pour la coupure ou pour la commande de l'inclinaison de l'écoulement de l'air (2), située dans le conduit (1) et prévue, en prenant différentes positions, pour couper l'écoulement (2) de l'air et pour lui permettre un seul passage ou plusieurs passages (8, 10) simultanément.

2. Dispositif de ventilation selon la revendication 1, caractérisé en ce que l'élément (6) dans le conduit (1) définit un canal central (8) qui est globalement parallèle à l'axe du conduit (1) et, en coopération avec la paroi interne du conduit (1), deux canaux latéraux (10) qui sont inclinés de façon symétrique par rapport à l'axe du conduit (1) dans des directions opposées.

3. Dispositif de ventilation selon la revendication 2, caractérisé en ce que l'élément (6) supporte un volet de déflexion (12) dans le passage central (8) pour la commande de l'inclinaison de l'écoulement de l'air (2) par rapport au plan horizontal.

4. Dispositif de ventilation selon l'une quelconque des revendications précédentes, caractérisé en ce que la pièce d'obturation (14) est située en amont de l'élément (6) et a une forme semi-tubulaire avec une fente axiale (16); selon sa position angulaire, ladite pièce empêche une communication entre l'extrémité d'entrée (3) du conduit (1) et son extrémité de sortie (4) ou met l'extrémité d'entrée (3) en communication avec un ou plusieurs des passages (8, 10) pour permettre une modification de la direction de l'écoulement de l'air (2) du dispositif de ventilation.
